# EUROPEAN PATENT APPLICATION

(11) **EP 4 738 220 A1**
(43) Date of publication of application: **06.05.2026**
(21) Application number: 25210368.4
(22) Date of filing: 22.10.2025
(51) Int. Cl.: G06Q 10/20, G06F 9/451

(54) **GENERATIVE AI INDUSTRIAL AUTOMATION AUGMENTED REMOTE SUPPORT SERVICES**

(30) Priority: 01.11.2024 US 202418934970
(71) Applicant: Rockwell Automation Technologies, Inc., Mayfield Heights, OH 44124 (US)
(72) Inventor: Mehrotra, Abhishek, Mayfield Heights, OH, 44124 (US); Taylor, Steven P., Mayfield Heights, OH, 44124 (US); Wiant, Jessica L., Mayfield Heights, OH, 44124 (US); Ravindranath, Aparna, Mayfield Heights, OH, 44124 (US); Flores, Britney, Mayfield Heights, OH, 44124 (US)
(74) Representative: Grünecker Patent- und Rechtsanwälte PartG mbB

(57) **Abstract**

An industrial remote support system acts as an interactive assistant that leverages generative augmented reality (AR) and artificial intelligence (AI) techniques to provide dynamic support information for industrial assets. The system can suggest solutions to performance problems based on earlier documented solutions, thereby expediting the process of finding resolutions. Users can submit information about the industrial asset for which support is requested via an optical or data scan of the asset using an AR-capable client device. The system enhances a user's prompt with relevant contextual data retrieved from stored documentation as well as relevant past chat histories to assist the system's generative AI model in recommending accurate resolutions to alarm conditions or performance issues described by the user's prompt.

## Description

### TECHNICAL FIELD

The subject matter disclosed herein relates generally to industrial automation systems, and, for example, to digitally assisted technical support for industrial assets.

### BACKGROUND ART

Maintenance and troubleshooting of a plant's industrial control systems and their associated machines and devices are typically carried out by on-site service engineers or machine operators. While some types of routine machine alarm or fault conditions can be easily addressed, unfamiliar alarm conditions or system performance issues require the service personnel to expend considerable time and effort finding resolutions to the problems. These resolution efforts can include referencing device or software manuals or contacting a vendor's customer support personnel for assistance in diagnosing and resolving the condition.

The above-described deficiencies of current approaches to resolving industrial alarm conditions and performance issues are merely intended to provide an overview of some of the problems of current technology, and are not intended to be exhaustive. Other problems with the state of the art, and corresponding benefits of some of the various non-limiting embodiments described herein, may become further apparent upon review of the following detailed description.

### BRIEF DESCRIPTION

The following presents a simplified summary in order to provide a basic understanding of some aspects described herein. This summary is not an extensive overview nor is it intended to identify key/critical elements or to delineate the scope of the various aspects described herein. Its sole purpose is to present some concepts in a simplified form as a prelude to the more detailed description that is presented later.

In one or more embodiments, a system is provided, comprising a user interface component configured to receive, from a client device associated with an industrial customer, visual data representing shapes of objects within a field of view of the client device; an asset identification component configured to identify an industrial asset within the field of view of the client device based on first analysis of the visual data; a context retrieval component configured to, based on a result of the first analysis performed by the asset identification component, retrieve contextual data determined to be relevant to the industrial asset from a repository of industrial documentation; and a generative AI component configured to generate a natural language response comprising information about the industrial asset based on second analysis of the result of the first analysis performed by the asset identification component, the contextual data, and a response prompted from a generative AI model, wherein the user interface component is configured to render the natural language response on the client device.

Also, one or more embodiments provide a method, comprising receiving, by a system comprising a processor, visual data from a client device associated with an industrial customer, wherein the visual data represents shapes of objects within a field of view of the client device; in response to the receiving, identifying, by the system, an industrial asset within the field of view of the client device based on first analysis of the visual data; retrieving, by the system based on a result of the first analysis, contextual data determined to be relevant to the industrial asset from a repository of industrial documentation; generating, by the system, a natural language response comprising information about the industrial asset based on second analysis of the result of the first analysis, the contextual data, and a response prompted from a generative artificial intelligence (AI) model; and rendering, by the system, the natural language response on the client device.

Also, according to one or more embodiments, a non-transitory computer-readable medium is provided having stored thereon instructions that, in response to execution, cause a system to perform operations, the operations comprising receiving visual data from a client device associated with an industrial customer, wherein the visual data represents shapes of objects within a field of view of the client device; and in response to the receiving: identifying an industrial asset within the field of view of the client device based on first analysis of the visual data; retrieving, based on a result of the first analysis, contextual data determined to be relevant to the industrial asset from a repository of industrial documentation; generating a natural language response comprising information about the industrial asset based on second analysis of the result of the first analysis, the contextual data, and a response prompted from a generative artificial intelligence (AI) model; and rendering the natural language response on the client device.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is a block diagram of an example industrial control environment.
FIG. 2 is a block diagram of an example industrial remote services system.
FIG. 3 is a diagram illustrating an example architecture of the industrial remote support system.
FIG. 4 is a diagram illustrating enhancement of a user prompt with contextual data and previous chat history data prior to submission to a generative AI model.
FIG. 5 is a diagram illustrating prompting of a generative AI model by the system's generative AI component.
FIG. 6 is an example chat window that can be generated and used to interact with the system.
FIG. 7 is a diagram illustrating delivery and storage of a technical support response.
FIG. 8 is a diagram illustrating high-level, generalized data flows associated with collection and updating of asset data using a client device with augmented reality (AR) capabilities, visual data collection capabilities, or wireless data scanning capabilities.
FIG. 9 is a diagram illustrating generation and delivery of asset-specific support information for an industrial asset scanned by a user's client device.
FIG. 10 is a diagram illustrating an example architecture in which a context retrieval component and a generative AI component are used to detect and respond to alarms or other industrial asset performance issues in substantially real-time.
FIG. 11 is a flowchart of an example methodology for registering or updating an asset record of an industrial asset with an industrial remote support system.
FIG. 12a is a flowchart of a first part of an example methodology for performing AR-assisted remote support for industrial assets.
FIG. 12b is a flowchart of a second part of the example methodology for performing AR-assisted remote support for industrial assets
FIG. 13 is an example computing environment.
FIG. 14 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (e.g., screwed or bolted) or removable affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; e.g., the set with no elements therein. Thus, a "set" in the subject disclosure includes one or more elements or entities. As an illustration, a set of controllers includes one or more controllers; a set of data resources includes one or more data resources; etc. Likewise, the term "group" as utilized herein refers to a collection of one or more entities; e.g., a group of nodes refers to one or more nodes.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches also can be used.

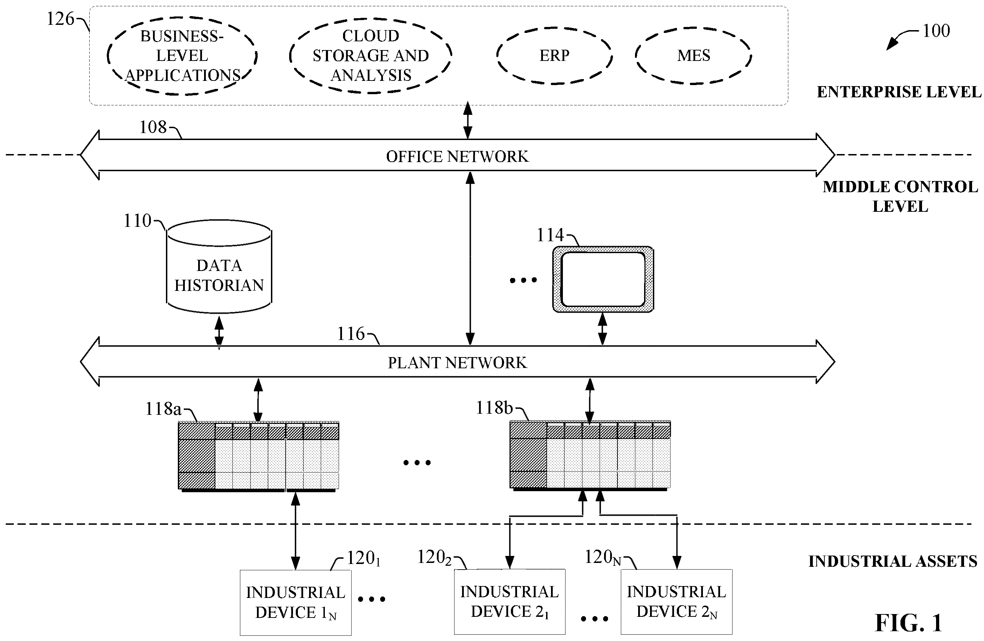

FIG. 1 is a block diagram of an example industrial control environment 100. In this example, a number of industrial controllers 118 are deployed throughout an industrial plant environment to monitor and control respective industrial systems or processes relating to product manufacture, machining, motion control, batch processing, material handling, or other such industrial functions. Industrial controllers 118 typically execute respective control programs to facilitate monitoring and control of industrial devices 120 making up the controlled industrial assets or systems (e.g., industrial machines). One or more industrial controllers 118 may also comprise a soft controller executed on a personal computer or other hardware platform, or on a cloud platform. Some hybrid devices may also combine controller functionality with other functions (e.g., visualization). The control programs executed by industrial controllers 118 can comprise substantially any type of control code capable of processing input signals read from the industrial devices 120 and controlling output signals generated by the industrial controllers 118, including but not limited to ladder logic, sequential function charts, function block diagrams, or structured text.

Industrial devices 120 may include both input devices that provide data relating to the controlled industrial systems to the industrial controllers 118, and output devices that respond to control signals generated by the industrial controllers 118 to control aspects of the industrial systems. Example input devices can include telemetry devices (e.g., temperature sensors, flow meters, level sensors, pressure sensors, etc.), present sensing devices (e.g., inductive or capacitive proximity sensors, photoelectric sensors, ultrasonic sensors, etc.), manual operator control devices (e.g., push buttons, selector switches, etc.), safety monitoring devices (e.g., safety mats, safety pull cords, light curtains, etc.), and other such devices. Output devices may include motor drives, pneumatic actuators, signaling devices, robot controllers, valves, pumps, and the like.

Industrial controllers 118 may communicatively interface with industrial devices 120 over hardwired or networked connections. For example, industrial controllers 118 can be equipped with native hardwired inputs and outputs that communicate with the industrial devices 120 to effect control of the devices. The native controller I/O can include digital I/O that transmits and receives discrete voltage signals to and from the field devices, or analog I/O that transmits and receives analog voltage or current signals to and from the devices. The controller I/O can communicate with a controller's processor over a backplane such that the digital and analog signals can be read into and controlled by the control programs. Industrial controllers 118 can also communicate with industrial devices 120 over a network using, for example, a communication module or an integrated networking port. Exemplary networks can include the Internet, intranets, Ethernet, DeviceNet, ControlNct, Data Highway and Data Highway Plus (DH/DH+), Remote I/O, Fieldbus, Modbus, Profibus, wireless networks, serial protocols, and the like. The industrial controllers 118 can also store persisted data values that can be referenced by their associated control programs and used for control decisions, including but not limited to measured or calculated values representing operational states of a controlled machine or process (e.g., tank levels, positions, alarms, etc.) or captured time series data that is collected during operation of the automation system (e.g., status information for multiple points in time, diagnostic occurrences, etc.). Similarly, some intelligent devices - including but not limited to motor drives, instruments, or condition monitoring modules - may store data values that are used for control and/or to visualize states of operation. Such devices may also capture time-series data or events on a log for later retrieval and viewing.

Industrial automation systems often include one or more human-machine interfaces (HMIs) 114 that allow plant personnel to view telemetry and status data associated with the automation systems, and to control some aspects of system operation. HMIs 114 may communicate with one or more of the industrial controllers 118 over a plant network 116, and exchange data with the industrial controllers to facilitate visualization of information relating to the controlled industrial processes on one or more pre-developed operator interface screens. HMIs 114 can also be configured to allow operators to submit data to specified data tags or memory addresses of the industrial controllers 118, thereby providing a means for operators to issue commands to the controlled systems (e.g., cycle start commands, device actuation commands, etc.), to modify setpoint values, etc. HMIs 114 can generate one or more display screens through which the operator interacts with the industrial controllers 118, and thereby with the controlled processes and/or systems. Example display screens can visualize present states of industrial systems or their associated devices using graphical representations of the processes that display metered or calculated values, employ color or position animations based on state, render alarm notifications, or employ other such techniques for presenting relevant data to the operator. Data presented in this manner is read from industrial controllers 118 by HMIs 114 and presented on one or more of the display screens according to display formats chosen by the HMI developer. HMIs may comprise fixed location or mobile devices with either user-installed or pre-installed operating systems, and either user-installed or pre-installed graphical application software.

Some industrial environments may also include other systems or devices relating to specific aspects of the controlled industrial systems. These may include, for example, a data historian 110 that aggregates and stores production information collected from the industrial controllers 118 or other data sources, device documentation stores containing electronic documentation for the various industrial devices making up the controlled industrial systems, inventory tracking systems, work order management systems, repositories for machine or process drawings and documentation, vendor product documentation storage, vendor knowledgebases, internal knowledgebases, work scheduling applications, or other such systems, some or all of which may reside on an office network 108 of the industrial environment.

Higher-level systems 126 may carry out functions that are less directly related to control of the industrial automation systems on the plant floor, and instead are directed to long term planning, high-level supervisory control, analytics, reporting, or other such high-level functions. These systems 126 may reside on the office network 108 at an external location relative to the plant facility, or on a cloud platform with access to the office and/or plant networks. Higher-level systems 126 may include, but are not limited to, cloud storage and analysis systems, big data analysis systems, manufacturing execution systems, data lakes, reporting systems, etc. In some scenarios, applications running at these higher levels of the enterprise may be configured to analyze control system operational data, and the results of this analysis may be fed back to an operator at the control system or directly to a controller 118 or device 120 in the control system.

Maintenance and troubleshooting of a plant's industrial control systems and their associated machines and devices are typically carried out by on-site service engineers or machine operators. While some types of routine machine alarm or fault conditions can be easily addressed, unfamiliar alarm conditions or system performance issues require the service personnel to expend considerable time and effort finding resolutions to the problems. These resolution efforts may involve referencing device or software manuals or contacting a vendor's customer support personnel for assistance in diagnosing and resolving the condition.

To address at least some of these or other issues, one or more embodiments described herein provide an industrial remote support system that leverages generative artificial intelligence (AI) techniques to suggest solutions to industrial alarm conditions or other performance problems based on earlier documented solutions, as well as providing answers to asset-specific or problem-specific questions submitted by users as natural language queries. The system enhances a user's prompt with relevant contextual data retrieved from stored documentation as well as relevant past chat histories to assist the system's generative AI model in recommending accurate resolutions to alarm conditions or performance issues described by the user's queries. The system can also maintain a dynamic inventory of the industrial assets - e.g., control and monitoring devices, machines, telemetry devices, etc. - that are in use within a customer's facilities and apply generative AI analysis to this asset inventory information, together with other contextual information, to formulate recommendations for maintaining acceptable performance of these assets, answering questions about the assets, or presenting training information for using and maintaining the assets. In some embodiments, information about the customer's assets can be collected via augmented reality devices or visual scanning, and the system can provide asset-specific information about these assets as augmented reality presentations.

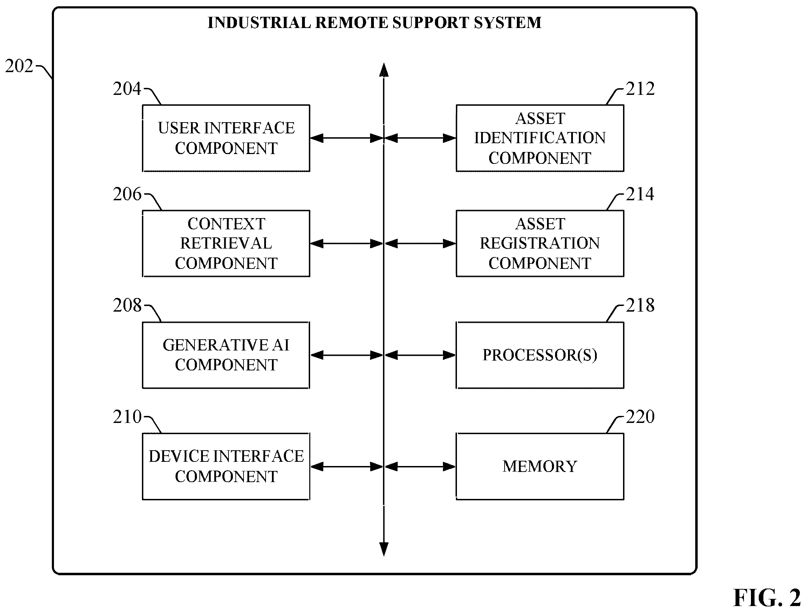

FIG. 2 is a block diagram of an example industrial remote support system 202 according to one or more embodiments of this disclosure. Aspects of the systems, apparatuses, or processes explained in this disclosure can constitute machine-executable components embodied within machine(s), e.g., embodied in one or more computer-readable mediums (or media) associated with one or more machines. Such components, when executed by one or more machines, e.g., computcr(s), computing device(s), automation device(s), virtual machine(s), etc., can cause the machine(s) to perform the operations described.

Industrial remote support system 202 can include a user interface component 204, a context retrieval component 206, a generative AI component 208, a device interface component 210, an asset identification component 212, an asset registration component 214, one or more processors 218, and memory 220. In various embodiments, one or more of the user interface component 204, context retrieval component 206, generative AI component 208, device interface component 210, asset identification component 212, asset registration component 214, the one or more processors 218, and memory 220 can be electrically and/or communicatively coupled to one another to perform one or more of the functions of the industrial remote support system 202. In some embodiments, components 204, 206, 208, 210, 212, and 214 can comprise software instructions stored on memory 220 and executed by processor(s) 218. Industrial remote support system 202 may also interact with other hardware and/or software components not depicted in FIG. 2. For example, processor(s) 218 may interact with one or more external user interface devices, such as a keyboard, a mouse, a display monitor, a touchscreen, or other such interface devices.

User interface component 204 can be configured to receive user input and to render output to the user in any suitable format (e.g., visual, audio, tactile, etc.). In some embodiments, user interface component 204 can be configured to generate and serve interface displays to a client device (e.g., a laptop computer, tablet computer, smart phone, etc.) that remotely accesses the remote support system 202 (e.g., via a hardwired or wireless connection). The user interface component 204 can then receive user input data and render output data via the client device. Input data that can be received via various embodiments of user interface component 204 can include, but is not limited to, natural language prompts requesting assistance with an automation system alarm or performance conditions, natural language prompts requesting information about a specific industrial asset, scanned or visual information about an industrial asset that can be used by the system 202 to update the customer's asset inventory information, or other such input. Output data rendered by various embodiments of user interface component 204 can include natural language responses to user prompts as part of a chat-based technical support interaction, dynamically generated insights or recommendations for maintaining or operating a customer's industrial insights, asset training information, or other such outputs.

Context retrieval component 206 can be configured to retrieve relevant context to a user's query from various data sources, including at least information regarding industrial assets in use at the customer's facilities, stored product documentation, and archived histories of previous problem resolutions. The retrieved contextual information is then combined with the user's query and analyzed using a generative AI model to assist in quickly converging on solutions or support guidance designed to address the user's issue. Generative AI component 208 can be configured to analyze the user's query and additional contextual information retrieved by the context retrieval component 206 - together with responses prompted from a generative AI model if necessary - to yield a response to the user's query in the form of insights into the problem conveyed by the query, recommended solutions to the problem, or other such insights. The generative AI component 208 can also formulate dynamic insights regarding performance and operation of the customer's automation systems and associated industrial assets without prompting from a user, based on monitoring of the assets' real-time and historical performance and maintenance. Device interface component 210 can be configured to remotely monitor real-time operational and status data from industrial devices, assets, and machines across multiple industrial facilities and customers.

The asset identification component 212 can be configured to identify an industrial asset based on information about the asset provided by a client device with visual or data scanning capability, such as a wearable appliance or another type of scanning device. This information can include, but is not limited to, visual data representing the user's environment (e.g., spatial mesh data, video or photographic data, etc.), smart data collected from the asset by the client device, optical character recognition (OCR) data collected from the asset (e.g. nameplate information), or other such data. The asset registration component 214 can be configured to generate and store information about a discovered asset as part of a repository of asset inventory data maintained for the customer. This asset information can include, for example, an identity or type of the asset, an asset classification (e.g., electronics, mechanical, office supplies, etc.), a current location, a status of the asset, or other such asset information.

The one or more processors 218 can perform one or more of the functions described herein with reference to the systems and/or methods disclosed. Memory 220 can be a computer-readable storage medium storing computer-executable instructions and/or information for performing the functions described herein with reference to the systems and/or methods disclosed.

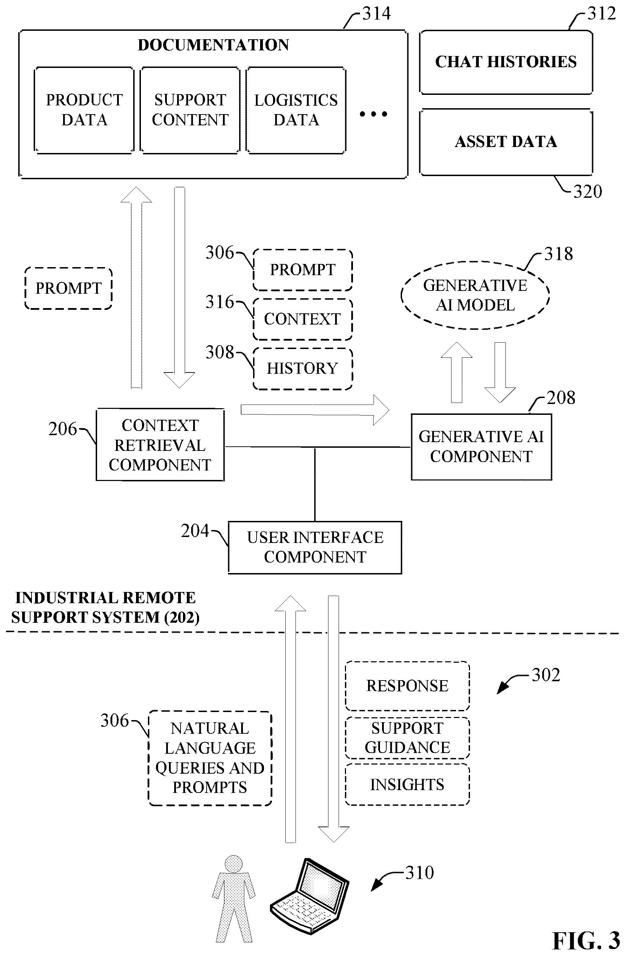

FIG. 3 is a diagram illustrating an example architecture of the industrial remote support system 202. Some embodiments of the remote support system 202 can be implemented on a cloud platform, as part of an Internet-of- Things (IoT) system, or on another centralized platform and made accessible to multiple industrial customers having authorized access to use the remote support system 202. Alternatively, some embodiments of digital remote support 202 may execute at least partially on a local client device while accessing remote services and repositories as needed.

A client device 310 (e.g., a laptop computer, a tablet computer, a desktop computer, a mobile device, an HMI terminal, a wearable augmented reality or virtual reality (AR/VR) appliance, etc.) owned by a user with suitable authentication credentials can access the system's support services. In some embodiments, the remote support system 202 can be an integrated sub-system of a larger industrial monitoring, analytics, or reporting system that monitors industrial assets and manufacturing operations at multiple customer sites and provides remote support services to those customers based on this operations tracking. Alternatively, the remote services system 202 may be implemented as a standalone system for providing interactive support assistance to industrial customers.

Industrial remote support system 202 leverages generative AI technologies in connection with providing technical support guidance for addressing alarm conditions or performance issues observed on a customer's industrial machines, assets, or automation systems, or providing information regarding specific industrial assets. To this end, system 202 includes a generative AI component 208 that leverages a generative AI model 318 to process a user's natural language prompts 306 and formulate responses or technical support guidance based on analysis of the prompts 306 as well as reference to stored documentation 314, chat histories 312 of prior technical support resolutions or asset question-and-answer sessions, and asset data 320 that identifies industrial assets that are in use within the customer's facility. The generative AI model 318 can be any of a diffusion model, a variational autoencoder (VAE), a generative adversarial network (GAN), a language-based generative model such as a large language model (LLM), a generative pre-trained transformer (GPT), a long short-term memory (LSTM) network, or other such models.

Through interaction with technical support interfaces generated by the system's user interface component 204, users can submit technical support requests or queries in the form of natural language prompts 306. In general, these prompts 306 can specify, using natural language, the nature of the technical problem for which the user requires assistance or a type of information about an industrial asset being requested. Example prompts 306 may request information about a specified industrial asset or an observed automation system behavior, recommended countermeasures for observed alarms or performance issues, recommended preventative actions for mitigating future problems, or other such support guidance. These prompts 306 may include such information as a description or name of an alarm that was generated by a machine, device, or automation system (e.g., "Suggest remedy for high syslog memory alarm," "Seeing error code: 5000 what do I need to do to fix it?", etc. ); an identity of a device or system for which support is needed together with a description of the type of assistance required (e.g., "How do I replace the fan on my 755 drive?", "What is the repair time for my motor drive?", "What maintenance do I need to do for the MV6000 drive that I have had for about 4 years?", etc.); or other information describing the type of desired support assistance.

Depending on the content of the user's initial prompt 306, the generative AI component 208 may determine that the prompt 306 does not contain sufficient information for providing high-confidence technical support guidance, or that additional information from the user about the problem being observed would yield technical support guidance having a higher probability of aligning with the user's needs. In such cases, the generative AI component 208 can render, via the user interface component 204, a natural language request for additional information from the user that can be used to refine the user's initial prompt 306 prior to analysis. As part of this process, the generative AI component 208 can prompt the user for specific items of additional information that will refine or enhance the initial prompt 306 in a manner that improves the likelihood that the generative AI component 208 will generate an accurate support response that satisfies the user's requirements. In this way, the generative AI component 208 can carry out an iterative natural language dialogue with the user, prompting the user to provide sufficient details about the technical support issue to ensure that the system 202 provides highly reliable and accurate technical support guidance.

To reduce or eliminate the possibility of hallucinations or other inaccurate outputs by the generative AI model 318, the context retrieval component 206 can supplement the user's natural language prompt 306 with relevant contextual data 316 and chat history data 308 retrieved from data sources maintained by, or otherwise accessible to, the remote support system 202. These data sources can include a repository of stored documentation 314, a repository of chat histories 312 that led to solutions to past technical support issues, and a repository of customer-specific asset data 320 that documents an inventory of industrial assets (e.g., industrial devices such as controllers or motor drives, telemetry devices and meters, sensors, industrial machines, etc.) that are in service within the customer's industrial facility. Asset data 320 can record, for respective industrial assets, model or vendor information for the asset, a type of the asset, information regarding customer-specific configurations applied to the asset (e.g., device settings, parameter values, etc.), software or firmware versions installed on the assets, or other such asset information.

Stored documentation 314 that can be maintained by the system 202 and accessed by the context retrieval component 206 can include, but is not limited to, programming manuals, industrial device manuals or product specification sheets, functional specification documents, knowledgebase articles describing solutions to known problems associated with specific industrial devices or software (which may be submitted to the system 202 by vendors of those devices for storage in the documentation repository), failure code information, or other such documents. Documentation 314 may also include logistics data for one or more product vendors or support entities, including information regarding availability of products such as replacement devices or parts as well as expected shipping lead times for these products.

In some embodiments, the system 202 can maintain both a globally accessible repository of documentation 314 that is accessed by the context retrieval component 206 in response to all prompts 306 regardless of the customer entity from which the prompt 306 was received, as well as individual customer-specific repositories of documentation assigned to respective different customer entities. In such embodiments, the system 202 allows each customer entity to submit their own proprietary documentation to their assigned documentation repository for storage in their customer-specific document repository. This customer-specific documentation can include, for example, plant standards, preferred device vendors, documentation on in-house programming standards, inventory information itemizing devices or equipment that is either in use or in inventory at the customer facility, maps of the customer's industrial facilities, or other such documentation. When a prompt 306 is retrieved from a user associated with a customer entity, the context retrieval component 206 will retrieve relevant contextual data 316 one or both of the globally accessible documentation 314 and the customer-specific documentation associated with the customer entity.

Archived chat histories 312 can comprise the content of chat sessions between the system 202 and various users across multiple different customer entities. Each chat history 312 can include the prompts 306 submitted by the user during a support session, as well as the support guidance, information, or resolution recommendations generated by the generative AI component 208 (assisted, when necessary, by responses prompted from the generative AI model 318) in response to these prompts 306. In some embodiments, each chat history 312 can also record feedback that was provided by the user indicating a degree to which system's responses addressed the concern specified by the initial prompt 306. This information can be leveraged by the generative AI model 226 when formulating responses to subsequent similar prompts 306.

Asset data 320 can comprise customer-specific information identifying industrial assets that are in use within the customer's facility, as well as historical operational and status information generated by these assets. In some embodiments, each registered customer entity may be designated a customer-specific asset data repository that exclusively maintains asset data 320 collected from that customer's industrial assets (e.g., by the device interface component 210). As will be described in more detail below, at least some of the asset data 320 recorded for a customer can be received by the system 202 as visual information or smart device data scanned by a user's client device. The system 202 can translate this scanned data to identify the scanned industrial assets and record this information as part of the customer's asset data 320.

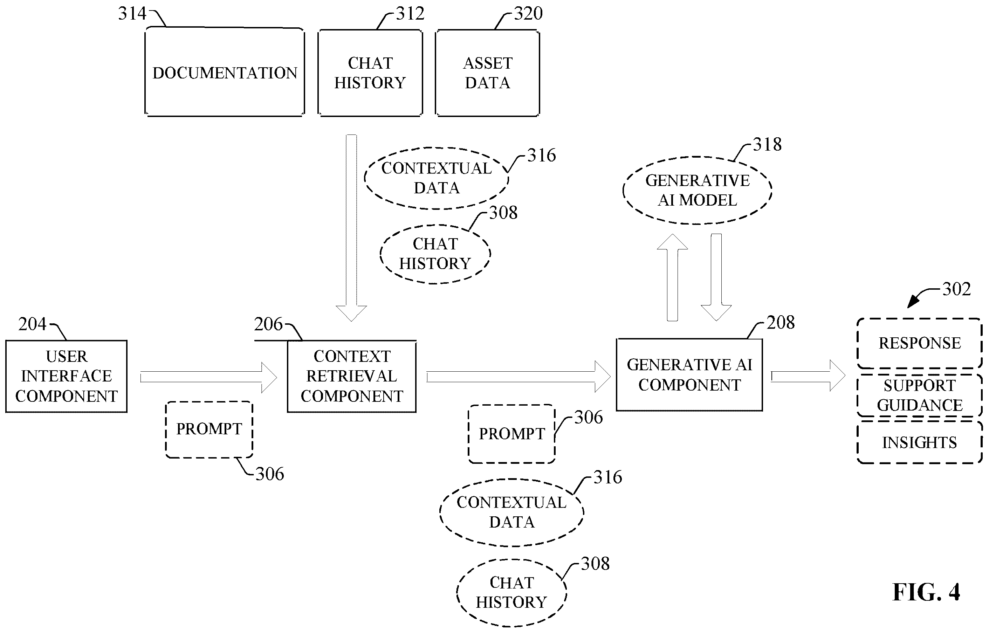

FIG. 4 is a diagram illustrating enhancement of a user prompt 306 with contextual data 316 and previous chat history data 308 prior to submission to the generative AI model 226. When a prompt 306 is received from a user associated with a customer entity (e.g., "Suggest remedy for high syslog memory alarm," "How do I place this machine in run mode?", "How do I home this machine?", etc.), the context retrieval component 206 analyzes the content of the prompt 306 and retrieves, from the stored documentation 314, a subset of information from this stored documentation 314 determined to be relevant to the prompt 306. Depending on the nature of the prompt 306, the context retrieval component 206 can also retrieve a relevant subset of asset data 320 determined to be relevant to the prompt 306. The context retrieval component 206 then adds this retrieve documentation and/or asset information to the prompt 306 as contextual data 316. The selected subset of documentation 314 and asset data 320 information can depend on such factors as the devices, machines, or industrial assets identified in the user's prompt 306 (which may guide selection of information from corresponding product manuals or knowledgebase articles stored as part of the documentation 314, or selection of asset data 320 relating to one or more assets that are the subject of the prompt 306); the nature of the question or technical support request conveyed by the prompt 306; an identity of a specific alarm for which assistance is requested; or other such information.

As noted above, each registered customer entity can be assigned a customer-specific document repository in which the customer can store their own proprietary documentation. This proprietary documentation can be used by the digital remote support 202 to customize the model's responses 302 in accordance with the customer's equipment, standards, protocols, or preferences. Accordingly, when a prompt 306 is received from a user associated with a customer entity, the context retrieval component 206 can retrieve relevant contextual data 316 from one or both of the customer-agnostic set of documentation 314 and the customer-specific documentation stored for that customer entity.

Additionally, the context retrieval component 206 can identify any previous chat histories 312 stored in the archived chat histories 312 that were directed to a customer support issue determined to be similar to the issue described by the prompt 306 currently being processed, and add these similar chat histories to the prompt 306 as chat history data 308. These similar chat histories can include information regarding how technical support issues similar to that described in the prompt 306 were resolved in the past, as well as metrics regarding how well the resolutions proposed by the model 226 satisfied the users' issues (e.g., in the form of user feedback or ratings).

Once the context retrieval component 206 has enhanced the prompt 306 with relevant contextual data 316 and chat history data 308, the generative Al component 208 analyzes the combined prompt 306, contextual data 316, and chat history data 308, and generates a response 302 to the prompt based on a result of this analysis. The user interface component 204 can then render this response 302 on the user's client device 310. The nature of the response 302 depends on the type of support being requested by the prompt 306. For example, if the prompt 306 requests assistance in addressing an alarm condition on an industrial asset, the response 302 can provide a natural language explanation of the alarm together with suggested actions or steps that can be performed to correct the alarm condition. In response to a prompt 306 comprising a question about an industrial device or asset (e.g., a question regarding how to perform a specified maintenance operation on the asset, a query about an estimated amount of time required to perform the maintenance operation, a request for suggested preventative maintenance actions to be performed on the asset in order to improve a performance metric or extend the assets lifecycle, etc.), the response 302 can be a natural language answer to the user's question. In all cases, the generative AI component 208 can leverage the contextual data 316 and chat history data 308 in connection with formulating the response 302, ensuring that the response 302 is catered to the specific use case conveyed by the prompt 306.

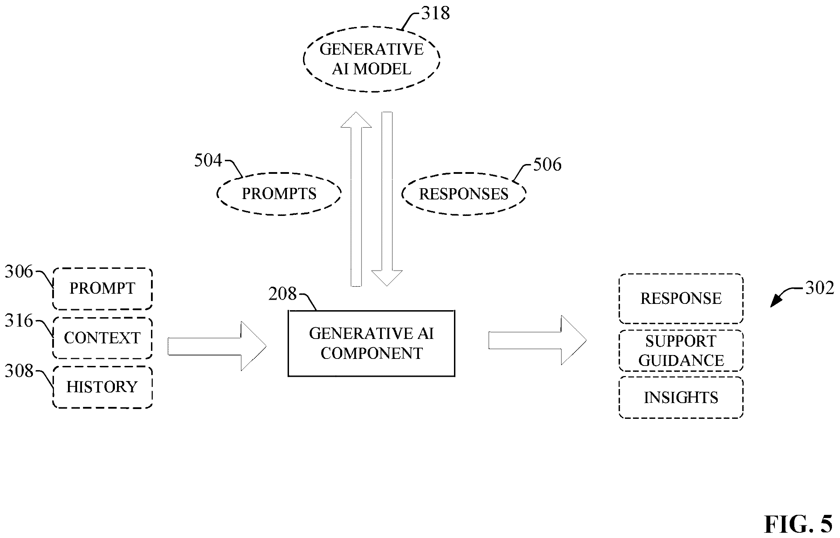

As noted above, industrial remote support system 202 can leverage generative AI to assist with alarm condition resolution and answering questions about the customer's industrial assets and machines. To this end, the system's generative AI component 208 can implement prompt engineering functionality using the prompt 306, contextual data 316, and chat history data 308, and can interface with a generative AI model 318 (e.g., a large language model or another type of model) and associated neural networks. FIG. 5 is a diagram illustrating prompting of the generative AI model 318 by the generative AI component 208. In some embodiments, the generative AI model 318 can reside and execute externally from the system 202, and the generative AI component 208 can include suitable connectivity tools and protocols, application programming interfaces (APIs), or other such services that allow the generative AI component 208 to exchange prompts and responses with the generative AI model 318.

When a natural language prompt 306 (see FIG. 3) is received, the generative AI component 208 can, as needed, formulate and submit prompts 504 to the generative AI model 318 designed to obtain responses 506 that assist the generative AI component 208 to generate a response 302 that satisfies the user's prompt 306 (that is, to generate a response 302 determined to have a probability of satisfying the user's prompt 306 that exceeds a defined probability level). These prompts 504 are generated based on content of the user's natural language prompt 306 as well as any industry knowledge and reference data encoded in the contextual data 316 or relevant chat history data 308. The generative AI component 208 can reference content of the contextual data 316 as needed in connection with processing a user's natural language prompt 306 and prompting the generative AI model 318 for responses 506 that assist the generative AI component 208 in processing these prompts 306. The generative AI component 208 can generate the prompt 504 to include at least one of information extracted or inferred from the natural language prompt 306, an identity of an industrial asset that is the subject of the prompt 306, a description of the issue for which the user requires insight or guidance, a type of industrial application being performed by the industrial automation system to which the user's natural language prompt 306 is directed, an industrial vertical in which the industrial automation system operates, or other such information. In an example scenario, of the context retrieval component 206 retrieves a technical document - such as a device or product manual - as part of contextual data 316 determined relevant to the user's prompt 306, the generative AI component 208 may extract multiple portions of text from the document determined to be relevant to the prompt 306 (e.g., potential countermeasures or device configuration settings that may address a performance issue reported by the prompt 306, sets of information that may be relevant to the answer to the user's query, etc.), and select and rank the most relevant results from this set. The generative AI component 208 can, as needed, prompt the generative AI model 318 to assist with any of these data extraction, selection, and ranking steps.

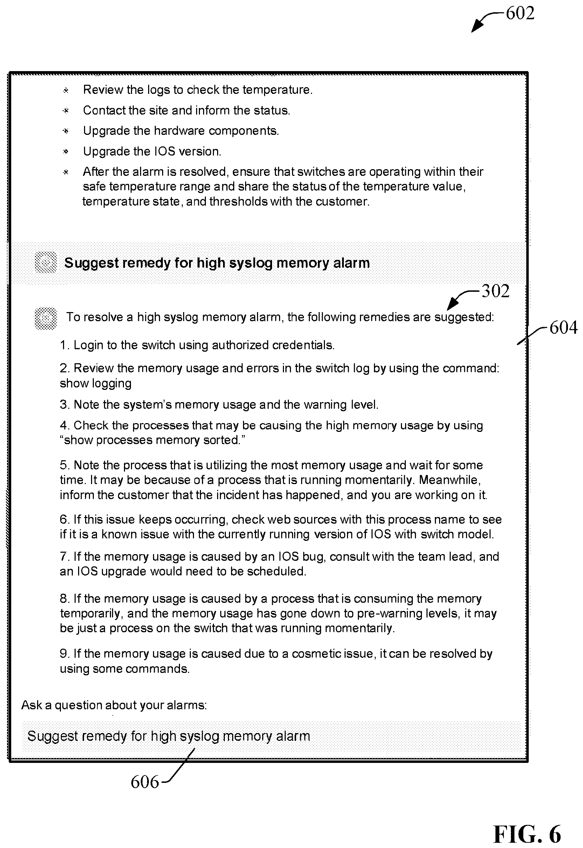

FIG. 6 is an example chat window 602 that can be generated by the user interface component 204 and used to interact with the system 202. The example chat window 602 includes a data entry field 606 through which a user can submit prompts 306 to the system 202. In the illustrated example, the user has submitted a prompt 306 requesting a remedy for a specified alarm that the user has observed on an industrial asset ("Suggest remedy for high syslog memory alarm."). In response to submission of this prompt 306, the context retrieval component 206 enhances the prompt 306 with relevant contextual data 316 and chat history data 308, and the generative AI component 208 generates its response 302 to the prompt 306 based on this aggregated information and, if deemed necessary to ensure a response 302 that accurately addresses the user's prompt 306, responses 506 prompted from the generative AI model 318, as described above in connection with FIGs. 3-5. The user interface component 204 renders the model's response 302 in a response section 604 of the chat window 602. In the illustrated example, the response 302 is in the form of a numbered and ordered list of steps to be performed in order to remedy the indicated alarm.

Although the example chat window 602 is designed to receive prompts 306 as text-based inputs submitted via data entry field 606, some embodiments of the remote support system 202 can be configured to receive prompts 306 in other formats, including spoken speech input, visual input scanned using a wearable AR/VR appliance or another type of client device capable of collecting optical data, or smart device data wirelessly scanned from an industrial device or asset using a client device.

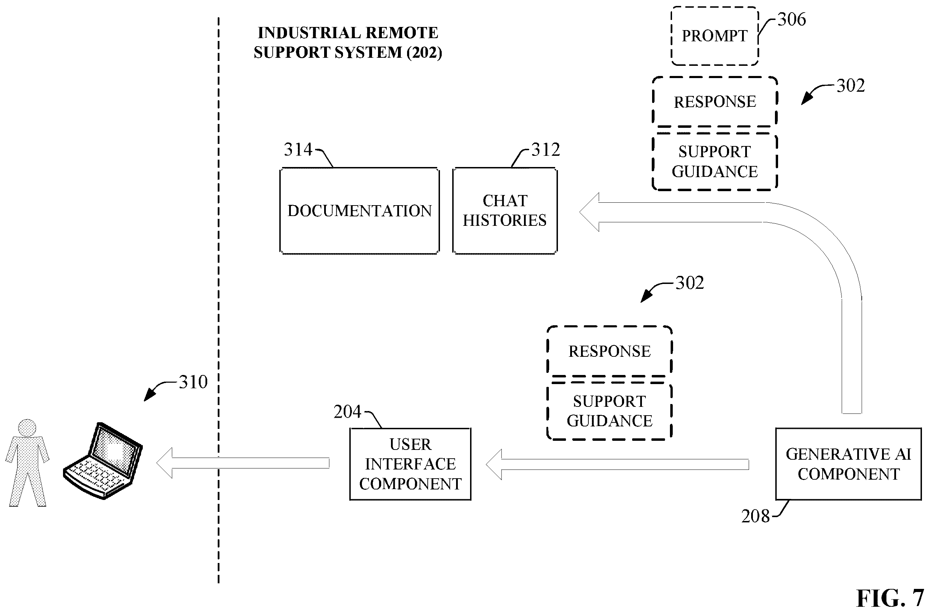

FIG. 7 is a diagram illustrating delivery and storage of the model's response 302. When the system 202 has generated a response 302 to the user's prompt 306, the response 302 is submitted to the user interface component 204 for rendering on the user's client device 310 (e.g., via window 602 illustrated in FIG. 6). Additionally, the user's prompt 306 is stored in the chat repository 312 in association with the model's responses 302 to the prompt 306, making the prompt 306 and responses 302 accessible to the context retrieval component 206 for use in refining the model's responses 302 to similar prompts 306 in the future. If the user provides feedback indicating a degree to which the model's response 302 addressed the user's issue, the generative AI component 208 can also store this feedback information in association with the prompt 306 and corresponding responses 302.

As noted above, some embodiments of the digital remote support 202 can be an integrated automated support sub-system of an industrial monitoring and notification system that monitors industrial assets and manufacturing operations for multiple, geographically diverse customer entities and delivers real-time alerts, reports, or recommendations to those customer entities based on this operations tracking. In such embodiments, in addition processing natural language prompts 306 submitted by users, the remote support system 202 can dynamically maintain up-to-date asset data 320 that records the identities and status of industrial assets in use at the customer's facilities, configurations of those assets (e.g., device settings, values of configuration parameters, network settings, operating modes, etc.), and, in some cases, status and operational data generated by these industrial assets during operation. The system 202 can apply generative AI analysis to this asset data 320 to provide customer-specific insights or support guidance designed to assist with asset management, risk mitigation, and plant security.

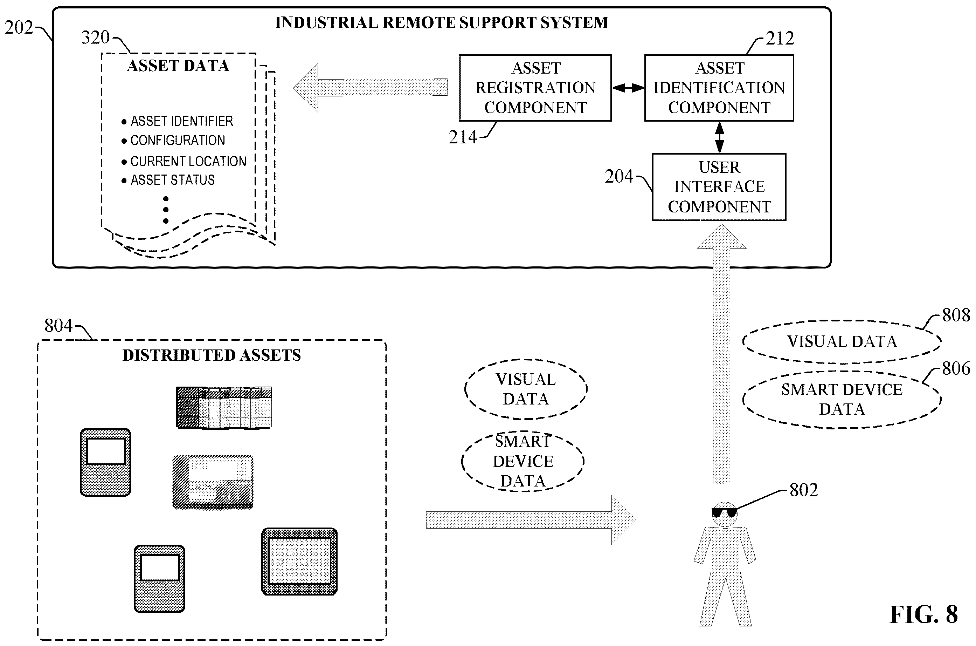

FIG. 8 is a diagram illustrating high-level, generalized data flows associated with collection and updating of asset data 320 using an augmented reality (AR) device such as wearable appliance or another type of client device 802 with AR capabilities, visual data collection capabilities, or wireless data scanning capabilities. An industrial facility or enterprise can house various types of assets 804, including industrial devices and associated parts or equipment (e.g., industrial controllers, I/O modules, motor drives, contactors, human-machine interface terminals, etc.); manufacturing machines and their associated mechanical components; equipment or parts used in the facility's automation systems; maintenance tools and equipment; and other such assets 804. These assets 804 are typically distributed throughout a facility and are either in-service or stored at a designated location.

At least some of the customer-specific asset data 320 maintained and analyzed by the remote support system 202 can be generated based on on-premise visual or data scanning of the customer's industrial assets 804 using a client device 802. In this way, the remote support system 202, working in conjunction with client device 802, can at least partially automate the process of registering the identities, configurations, and locations of the customer's industrial assets 804, and in some embodiments may also record the statuses of these assets 804. In general, client device 802 can collect information about assets 804 within a visual or communication range of the client device 802 and provide this asset information to the remote support system 202. Based on this collected asset information, the system 202 generates asset records that record the identities, statuses, and locations of the assets 804 and stores these records as part of the customer's asset data 320.

The system 202 can leverage various types of information collected and provided by the client device 802, including visual data 808 (e.g., spatial mesh data, optical data, video or photographic data, etc.) representing shapes of objects and surfaces within the user's field of view or smart device data 806 read from smart devices by the client device 802. The system 102 uses this information to create or update asset records, which are recorded as part of the customer's proprietary asset data 320.

An asset record for a given industrial asset 804 can record such information as an identifier for the asset 804, a type or classification of the asset 804, a current location of the asset 804, status information for the asset 804 (e.g., memory or processing capability, software or firmware versions installed on the asset, etc.), configuration information for the asset 804 (e.g., values of device configuration parameters, network or security settings, etc.) or other such information.

The remote support system 202 can include an asset identification component 212 configured to recognize or identify an asset 804 scanned by the client device 802 based on analysis of visual data 808 received from the client device 802. Various types of asset recognition processing can be performed by the asset identification component 212 depending on the type of visual data 808 being processed. For example, in the case of visual data 808 comprising spatial mesh data or other types of 3D modeling information, the asset identification component 212 can apply shape recognition analysis to identify asset types based on their shapes, as obtained based on analysis of the spatial mesh data. In some embodiments, the asset identification component 212 can access the generative AI model 318 as needed to assist in identifying an industrial asset based on the content of the visual data 808. This generative Al-assisted analysis can include, for example, generating and submitting a prompt to the generative AI model 318 containing at least a portion of the visual data 808, and identifying the type of the industrial asset based on the generative AI model's response to the prompt.

In some cases, an asset 804 may be labeled or marked with an optical code, such as a barcode or a QR code, that encodes information about the asset, such as the asset's model number, vendor, asset type, or other such information. In such scenarios, the client device 802 can scan this optical code to obtain the encoded asset information and send this information to remote support system 202 (e.g., as part of visual data 808). Asset identification component 212 can translate this optical code information into registerable information about the asset 308044 that can be stored as part of the customer's asset data 320.

Some assets 804, such as smart industrial devices, may also store self-identifying information - or smart device data 806 - on local readable memory that can be wirelessly accessed and read by the client device 802. Some smart devices can automatically update their stored smart device data 806 to reflect their current states, software, or capabilities. To register such devices, the client device can query the asset 804 via a wireless channel for any smart device data 804 that may be stored locally on the asset 804, retrieve the stored smart device data 806 via the channel if present, and relay the data 806 to the remote support system 102 via the system's user interface component 204. Any suitable type of wireless link between the client device 802 and the smart device can be used to query for and retrieve the device's data 806.

The content of smart device data 806 can depend on the type and vendor of the asset 804, and may include a model or serial number for the asset 804, a vendor identifier, a type of the asset 804 (e.g., industrial controller, an I/O module of a specific type, a variable frequency drive, a type of machine, etc.), specification information for the asset 804 (e.g., nameplate information, power supply information, supported functions of the asset, available memory or processing capacities, etc.), software installed on the asset 804, a firmware version installed on the asset 804, or other such information. Other sources of asset information can also be accessed or interpreted by the client device 802 and provided to the remote support system 202 in various embodiments.

Asset registration component 214 can generate asset records based on analysis of one or more of the visual data 808 and smart device data 806, as well as other contextual data provided by the client device. For newly discovered assets 804 that have not yet been registered as part of asset data 320, the asset registration component 214 can generate a new asset record for the new asset 804 and populate the record with information about the new asset 804, as obtained based on the data submitted by the client device 802 and analysis of that data by the asset identification component 212 (assisted where necessary by responses prompted from the generative AI model 318). The content of the data contained in an asset's data record can depend on the type of asset.

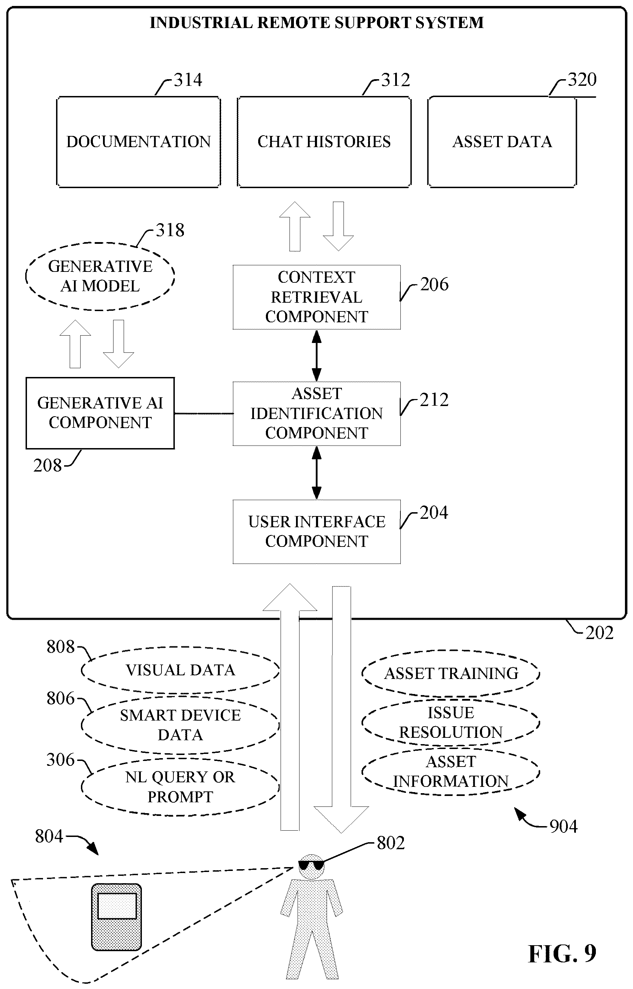

In addition to using visual data 808 obtained from an AR-capable client device 802 to update a customer's asset data 320, some embodiments of the remote services system 202 can interact with AR-capable client devices 802 within the plant facility to provide AR-assisted asset training and support information on request. FIG. 9 is a diagram illustrating generation and delivery of asset-specific support information for an industrial asset 804 scanned by a user's client device 802. In general, processing for AR-assisted support is broadly similar to that described above in connection with FIGs. 3-5, in which a user's natural language prompts 306 are processed by the system 202 to generate technical support responses 302. However, in the case of AR-assisted support, visual data 808 or smart device data 806 generated by the user's client device 802 based on a visual scan or a data scan of an industrial asset 804 is submitted in place of, or in conjunction with, a natural language prompt 306, and the remote support system 202 generates and renders support information 904 for the scanned asset 804 based on analysis of the submitted data 808, 806 and any accompanying natural language prompt 306. As in the case of the purely prompt-based analysis described above in connection with FIGs. 3-5, this AR-assisted analysis leverages relevant contextual data 316 (obtained from stored documentation 314), chat history data 308, and responses 506 prompted from the generative AI model 318 as needed.

In an example scenario, a user may desire information about a specific industrial asset 804 within the user's vicinity. Accordingly, the user can scan the asset 804 using client device 802 to obtain information that can be used by the asset identification component 212 to identify the asset 804. Depending on the capabilities of the client device 802 and the asset 804 itself, this scanned data may comprise visual data 808 generated by the client device 802 based on a visual scan of the asset 804 (e.g., if the client device 802 is an AR-capable device or has an integrated camera) or smart device data 806 wirelessly retrieved from the asset's 804 memory by the client device 802. If the user desires a specific type of information about the asset 804, the user may also submit a natural language prompt 306 (as described above in connection with FIG. 3) describing the nature of the requested information. This supplemental prompt 306 can be submitted as a text-based request or as a spoken request. In the case of spoken prompts 306, the client device 802 can collect ambient audio of the user's speech, translate this audio information into a natural language text data using speech-to-text processing, and submit the resulting text data to the system 202 as the prompt 306. Example prompts 306 that can be submitted in conjunction with the visual data 808 or smart device data 806 can include, but are not limited to, requests for assistance in addressing an asset performance issue observed by the user, requests for assistance in configuring the asset 804 to perform a specified function (e.g., "How do I place this machine in semi-auto mode?", "How do I change the acceleration time on this VFD?", etc.), requests for operator or maintenance training on the asset 804, or other such prompts 306.

The asset identification component 212 can process the visual data 808 or smart device data 806 to identify the scanned asset 804 as described above in connection with FIG. 8. In this case, the identity of the asset 804 is used by the system 202 to generate support information 904 relating to the asset 804. The system 202 can process the identity of the asset 804 as well as any accompanying prompt 306 that specifies the type of information being requested, in a manner similar to the processing of prompt 306 described above in connection with FIGs. 3-5. This can include retrieving contextual data 316 and chat history data 308 deemed relevant to the asset 804 and the type of information being requested by the prompt 306, prompting the generative AI model 318 for a response 506 that assists in formulating the support information 904, and rendering the resulting support information 904 on the user's client device 802. This support information 904 can include, for example, training information explaining how to operate or maintain the asset 804, issue resolution information describing operational or maintenance actions that can be taken by the user to resolve a performance problem experienced by the asset 804, general information about the scanned asset 804 (e.g., an identity and function of the asset 804, operational statistics for the asset 804, etc.), information explaining how to activate software on the asset 804, contact information for live technical support personnel who can provide support for the asset 804, or other such information 904.

If the client device 802 is an AR-capable device, the system's user interface component 204 can render at least some of the support information 904 as an augmented reality presentation on the client device 802. These augmented reality presentations can superimpose portions of the support information 904 over a live view of the asset 804 being rendered on the client device 802 (or within the user's field of view in the case of a wearable AR appliance). This superimposed information can comprise alphanumeric text or a graphical indicator rendered at a position within the live view of the asset 804 (or a location within the user's field of view) that places the text or indicator near a component of the asset 804 to which the information relates. For example, if the support information 904 generated by the system 202 is intended to assist the user in changing a state of a mode select switch on an asset 804 being viewed through the client device 802, the user interface component 204 may render a natural language instruction to position the switch to an indicated mode, together with a graphical indicator that identifies the switch to be repositioned.

The content of an AR presentation rendered on the client device 802, and the placement of text and graphics within the presentation, is based on a variety of data submitted to the system 202 by the client device 802, including visual data representing shapes of objects and surfaces within the user's surroundings, location and orientation data representing a current location and orientation of the client device 802, user identity data identifying the user or the user's role, or other such information. In some scenarios, the client device 802 can be configured to determine its current geographical location by leveraging global positioning system (GPS) technology to determine the client device's absolute location, or may be configured to exchange data with positioning sensors located within the plant facility in order to determine the user's relative location within the plant. The client device 802 can also include orientation sensing components that measure the client device's current orientation in terms of the direction of the client device's line of site, the angle of the client device 802 relative to horizontal, etc. The client device 802 can report its location and orientation information to the remote support system 202 as location and orientation data 902, which is used by the user interface component 204 to adapt the augmented reality presentation to the user's current location, orientation, and field of view, in terms of the presentation's content, formatting, and location within the user's field of view.

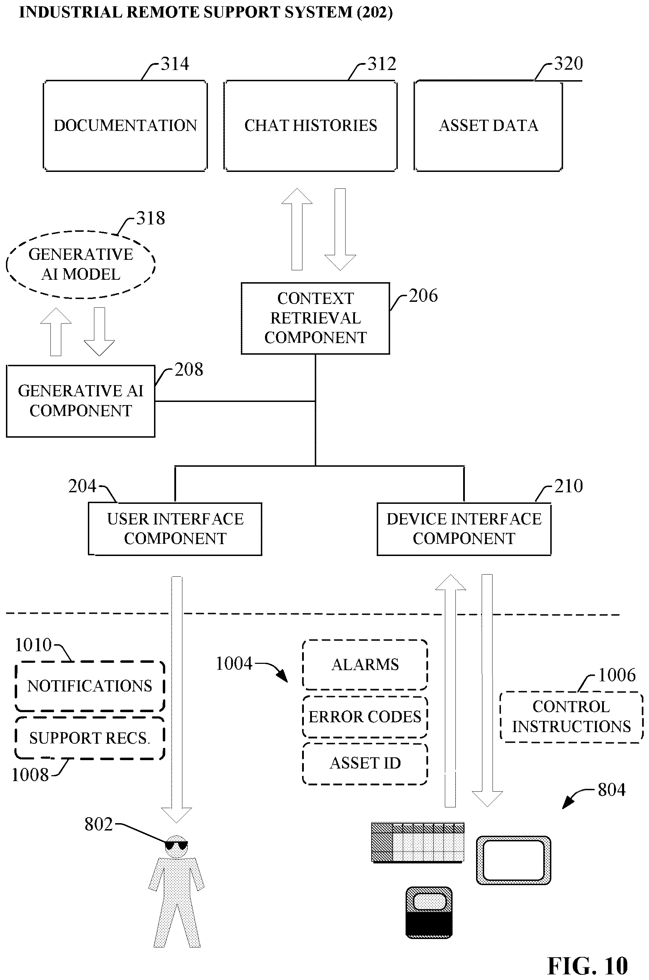

FIG. 10 is a diagram illustrating an example architecture in which the context retrieval component 206 and generative AI component 208 are used to detect and respond to alarms or other industrial asset performance issues in substantially real-time. In this example architecture, the remote support system 202 includes a device interface component 210 configured to remotely monitor or collect runtime data 1004 from industrial assets 804 (e.g., industrial devices such as controllers 118, motor drives, telemetry devices, sensors, network infrastructure devices such as switches or routers, etc.) that make up automation systems operating within plant facilities. This runtime data 1004 can comprise identification information for the assets 804 (e.g., a product serial number, an asset name, a device vendor and model, etc.), as well as operational and status data generated by these industrial assets during operation of their associated automation systems. The device interface component 210 and its associated services can monitor industrial assets 804 across multiple facilities owned by different customer entities who are registered to use the remote support system 202. This runtime embodiment of the remote support system 202 provides proactive generative AI-assisted notifications and support guidance to those customer entities based on monitoring and analysis of their respective sets of runtime data 1004. Device interface component 210 can remotely access customer's industrial assets 804 over any secure communication path, via any intervening public or private networks.

At least some of the runtime data 1004 monitored by the system 202 comprises alarm data generated by the industrial assets 804. This alarm data signifies an abnormal status or condition experienced by an industrial asset 804, and can include information identifying the nature of the alarm (e.g., an alarm number or description, an error code, etc.). As runtime data 1004 is collected from industrial assets 804 by the device interface component 210 during operation of their corresponding automation systems, any alarm conditions detected in the data 1004 are processed by the context retrieval component 206 and generative AI component 208 in a manner similar to that described above for processing user-provided prompts 306. Specifically, the context retrieval component 206 retrieves contextual data 316 and chat history data 308 determined to be relevant to the detected alarm condition, based on the nature of the alarm condition (e.g., the alarm description or its associated alarm or error code) as well as the identity of the industrial asset 804 experiencing the alarm condition. The contextual data 316 retrieved for a given alarm condition may include, for example, additional information about the alarm condition or relevant troubleshooting information obtained from a product manual for the industrial asset. Relevant chat history data 308 retrieved in response to detection of the alarm condition may include past dialogs between users and the generative AI component 208 in connection with resolving the same or similar alarm conditions experienced on similar industrial assets.

The alarm information collected from the industrial asset is then provided to the generative AI component 208 together with the retrieved contextual data 316 and chat history data 308, and the generative AI component 208 - leveraging the generative AI model 318 as needed - generates recommended actions or support guidance for addressing the alarm condition based on analysis of this aggregated information. The user interface component 204 can then deliver proactive notifications 1010 of the alarm condition to client devices 802 associated with relevant plant personnel (e.g., personnel responsible for maintaining the industrial asset experiencing the alarm condition) together with recommendation data 1008 that provides recommendations or guidance for addressing the condition. The recommendation data 1008 generated by the generative AI component 208 can include, for example, descriptions of steps to be taken to resolve the root cause of the alarm condition and clear the alarm (which may include navigational instructions directing the user to the location of the asset), recommendations for replacing an asset if the alarm condition cannot be resolved, directions or other such information. If the client device 802 is AR-capable, the user interface component 204 can render the notification 1010 and recommendation data 1008 as an augmented reality presentation on the client device 802.

In some embodiments, in addition to or as an alternative to providing support guidance, the generative AI component 208 and device interface component 210 can send control instructions 1006 to the industrial assets 804 in response to detection of an alarm condition and determination of a corresponding countermeasure by the generative AI component 208. These control instructions 1006 can be designed to implement at least a portion of the corrective countermeasures determined by the generative AI component 208, and can comprise, for example, instructions to modify a setpoint of a controlled industrial process, instructions to change an operating mode of a device or a machine (e.g., switching a machine to a safe state, such as a stopped or slow operating mode), instructions to change a speed of a process or motion control device in a manner that mitigates an impact of the abnormal condition conveyed by the alarm, or other such instructions. In some scenarios, the control instructions 1006 can initiate their control actions by remotely altering values of analog or digital data tags or registers of industrial controllers or other industrial devices in order to implement the corrective measures devised by the generative AI component 208.

In some embodiments, remote service system 202 can also issue control instructions 1006 as part of the AR-assisted support described above in connection with FIG. 9. For example, after scanning an asset 804 and submitting visual data 808 or smart device data 806 to the system 202, together with a text-based or verbal prompt 306 indicating the type of support being requested, the system 202 can process this support request as described above and generate support information 904 formulated to address the user's support request. Additionally, if appropriate, the generative AI component 208 can formulate a control instruction 1006 directed to the scanned asset 804 that is designed to automatically implement one or more of the support actions described by the support information 904. The device interface component 210 can then send the control instruction 1006 to the asset 804 to initiate the support action. These control instructions 1006 can perform such support actions as changing an operating mode of the asset 804, changing a value of a configuration parameter on the asset 804, updating a firmware version on the asset 804, writing a value to a data tag or register on the asset 804, clearing an alarm condition on the asset 804, or other such actions.

Some embodiments of the remote support system 202 can cater the responses 302, recommended support guidance, or control instructions 1006 based on unique environmental or contextual conditions in which the relevant industrial assets 804 operate. For example, it may be the case that industrial assets 804 or machines that operate in warmer locations or in plant facilities having relatively high levels of particulates in the air are more susceptible to certain alarm conditions or operational issues than similar assets or devices operating in other types of climates or environments. As such, countermeasures for alarm conditions that arise on assets within these types of environments may be different than those generated for similar assets in other environments. The generative AI component 208 can generate responses 302 or control instructions 1006 for addressing alarm conditions for these industrial assets 804 that take these contextual factors into consideration.

To this end, the device interface component 210 can store, as part of asset data 320, runtime collected from the industrial assets 804 in a cloud-based asset data repository. In some embodiments, each registered customer entity may be designated a customer-specific asset data repository that exclusively maintains runtime data collected from that customer's industrial assets 804. The generative AI component 208 can analyze this collected asset data 320 - including historical runtime data - to learn operational or alarm trends for individual industrial assets 804 that may deviate from the trends typically expected for similar industrial assets 804, which may indicate a contextual factor of the asset's environment that affects the asset's performance. When a user submits a prompt 306 relating to an industrial asset 804 (or submits a prompt 306 together with scanned visual data 808 or smart device data 806 to identify the asset 804), or when an alarm condition is detected in the asset's runtime data (stored as part of asset data 320), the context retrieval component 206 can retrieve relevant contextual data 316 and chat history data 308 for the prompt 306 or alarm as described above, and the generative AI component 208 can analyze this aggregated information together with learned performance trends for the individual asset as learned from the asset's stored asset data 320, and formulate the response 302 to the prompt 306 (or the countermeasure to the detected alarm condition) based on this analysis.

Since the remote services system 202 can dynamically document each customer's collection of industrial assets 804 as asset data 320, the system's generative AI component 208 can apply generative AI analysis to this collected asset data 320 to formulate customer-specific asset management insights, as well as recommendation data 1008 describing recommendations for mitigating or minimizing machine downtime or security risks given the customer's collection of industrial assets 804 and the manner in which those assets are being used. For example, in some embodiments the device interface component 210 can, based on the asset identification information collected from the industrial assets 804 as well as any relevant supplemental information (such as geotag information, plant documentation, or other such information), record the identities, locations, and functions of the customer's industrial assts 804 as part of asset data 320. This can include recording the identities of the industrial assets 804, locations of the assets 804 (including the plant facility and the location within the facility at which each asset is located), functional relationships between the assets 804, production lines or machines in which the respective assets 804 operate, or other such information. This aggregated asset data 320 can serve as an up-to-date inventory or asset base for the customer.

The generative AI component 208 can perform generative AI-assisted analysis on this collected asset data 320 - leveraging relevant contextual data 316 and responses 506 prompted from the generative AI model 318 as needed (see FIG. 5) - and identify, based on results of this analysis, potential risks that can be mitigated through asset management practices. Identification of such risks can be based in part on a learned understanding of the customer's various manufacturing systems - including the types of processes carried out by the respective manufacturing systems and the dependency relationships between the manufacturing systems - and the roles played by the respective assets 804 in the functioning of those manufacturing systems. For example, the generative AI component 208 can learn, based on analysis of the asset data 320, relevant subsets of documentation 314, and responses 506 prompted from the generative AI model 318, which of the customer's manufacturing systems or machines produce parts or materials that are used by other downstream manufacturing systems, as well as which other manufacturing systems require those parts and materials. As noted above, the generative AI component 208 can also learn which of the customer's industrial assets 804 are associated with each manufacturing system or machine, and the functional roles of those industrial assets 804.

Based on this learned knowledge of the customer's assets 804 and their functions, the generative AI component 208 can determine relative criticalities of the respective assets 804 to the customer's overall production goals, and infer levels of risk associated with failure of those critical assets 804 (e.g., a risk of excessive machine downtime, a risk of lost profits due to loss of productivity, etc.). Based on these inferred risks, the generative AI component 208 can further formulate recommendation data 1008 for the customer to stock replacements for selected assets 804 (e.g., industrial devices, parts, machine components, etc.), where these assets 804 are selected based on their criticality to the customer's operations or the high level of risk posed by failure of those specified assets 804. Based on this analysis, the system 202 can also generate and render a list of the customer's most vulnerable or most critical assets 804, together with recommendations for asset management actions designed to mitigate asset vulnerabilities or to ensure optimal and uninterrupted performance of the most critical assets.

Based on similar generative AI-assisted analysis, the generative AI component 208 can also identify potential cybersecurity risks associated with one or more assets 804, and formulate, as recommendation data 1008, recommendations for countermeasures predicted to mitigate these risks (e.g., installation of updated firmware on the relevant assets 804, replacement of one or more assets 804 with different but functionally similar assets that are not subject to the cybersecurity risk, etc.). This recommendation data 1008 can be rendered on the user's client device 802 by the user interface component 204 as a natural language message describing the recommendation and identifying the assets 1002 that are subject to the recommendations.

Example asset management recommendations that can be generated by the system 202 based on such generative Al-analysis of the user's asset data 320 can include, but are not limited to, recommendations to stock a specified number of backup instances of an asset 804 or associated component or device, recommendations to upgrade the firmware on one or more assets 804, recommendations to modify one or more configuration parameters on an asset 804, recommendations to alter an asset's operating schedule or that of the asset's associated automation system or machine, recommendations to perform a preventative maintenance action on a specified asset to extend the asset's operating life, or other such recommendations. The remote support system 202 can formulate these recommendations to reduce or eliminate potential asset-related risks predicted by the system 202, or to otherwise satisfy a criterion determined to be beneficial to the customer, such as reduction of excessive loss of production or revenue, reduction of excessive machine downtime, extension of an asset's lifecycle, or other such criteria.

As part of the generative AI analysis applied to the asset data 320, the generative AI component 208 can, as needed, retrieve and analyze relevant subsets of stored documentation 314 (e.g., information retrieved from product manuals or specification sheets for industrial assets identified by the asset data 320, archived chat histories 312 from which potential asset risks may be identified or that may suggest useful countermeasure for mitigating a particular type of security or operational risk, etc.). The generative AI component 208 can also generate prompts 504 (see FIG. 5) directed to the generative AI model 318 designed to obtain responses 506 that can be used to either identify a potential risk given the collection and functions of the industrial assets identified by the customer's asset data 320 or to formulate a recommended countermeasure predicted to reduce or eliminate a specific risk identified by the generative AI component 208. These prompts 504 can be generated based on selected content of the asset data 320 and any relevant contextual data 316 retrieved by the context retrieval component 206.

In some embodiments, in addition to or as an alternative to rendering recommendation data 1008, the generative AI component 208 and device interface component 210 can send control instructions 1006 to the industrial assets 804 that automatically implement one or more of the recommendations formulated by the system 202 for mitigating a detected risk. Such control instructions 1006 can, for example, modify a configuration parameter of a selected industrial device or asset 804, change an operating mode of an industrial asset, modify a control setpoint or other control parameter on an industrial asset 804, or perform other such control or configuration actions.

The industrial remote services system 202 described herein can expedite the process of finding resolutions to asset performance issues or alarm conditions by leveraging generative AI together with selected contextual data determined to be relevant to the issue being addressed. The system's generative AI model leverages multiple data sources to augment its knowledgebase, and these data sources remain updated with recent documentation and resolution notes to ensure continued accuracy of support guidance and corrective countermeasures.

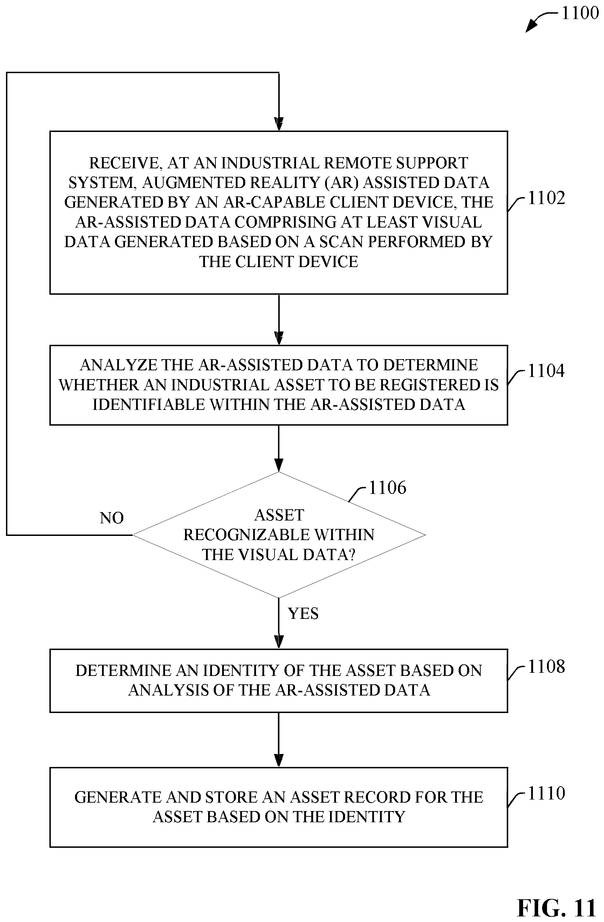

FIGs. 11-12b illustrate example methodologies in accordance with one or more embodiments of the subject application. While, for purposes of simplicity of explanation, the methodologies shown herein is shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 11 is an example methodology 1100 for registering or updating an asset record of an industrial asset with an industrial remote support system. Initially, at 1102, AR-assisted data generated by an AR-capable client device - such as a wearable appliance or other type of AR-capable device - is received at an industrial remote services system hosted on a cloud platform. The AR-assisted data can comprise at least visual data generated based on a scan performed by the client device (e.g., spatial mesh data, optical data, video or photographic data, or other such data) and in some cases may also include data specifying the current location and orientation of the client device. Other types of data can also be received from the client device, including but not limited to device data read from smart devices by the client device, speech or gesture data representing spoken commands or manual gestures performed by a user of the client device, or other such data. In some embodiments, submission of AR-assisted data can be contingent on verification that the user of the client device is an authorized user of the remote support system, and is also an authorized employee of the industrial customer for which the asset is being registered. In some cases, this verification can be achieved using biometric analysis (e.g., a retinal scan, voice recognition, etc.). Also, in some embodiments, collection and submission of the AR-assisted data can be initiated based on a detection of a defined trigger, such as a determination that the user has focused his or her gaze on the asset for a defined period of time (as determined based on an eye or retinal scan).

At 1104, the AR-assisted data received at step 1102 is analyzed to determine whether an industrial asset to be registered is identifiable within the data (e.g., within the visual data or within smart device data if such data was received from the client device). In various embodiments, the industrial asset can be recognized based on identification of asset shapes within spatial mesh information generated by the AR client device, optical character recognition analysis performed on an image of a nameplate attached to the asset, explicit asset information contained in smart device data read from a device and conveyed to the remote support system by the client device, or other such identification means. In some embodiments, the analysis performed at step 1104 can include generative AI-assisted analysis, whereby the remote support system can formulate prompts directed to a generative AI model based on content of the AR-assisted data, where these prompts are designed to obtain responses from the generative AI model that assist in identifying the asset and any relevant supplemental information about the asset to be registered with the system (e.g., a vendor of the asset, capability or specification information for the asset, etc.).

At 1106, a determination is made as to whether an industrial asset to be registered is recognizable within the data based on the analysis performed at step 1104. If no asset is recognized (NO at step 1106), the methodology returns to step 1102. In some cases, if an asset is present but not detected at step 1106, the user may invoke a manual data entry presentation that allows the user to enter information about the asset via manual entry or spoken identification. Alternatively, if an asset is recognized (YES at step 1106), the methodology proceeds to step 1108, where an identity of the asset is determined based on analysis of the AR-assisted data. For example, if spatial mesh data is received from the client device, the industrial asset can be identified based on a cross-referencing the shape of the asset with information defining shapes that are known to correspond with specific asset types. In another example, the asset can be identified based on explicit data about the asset stored on the asset's memory and read by the client device. In still another example, the asset may be identified based on nameplate information or other alphanumeric information printed on the asset and interpreted using optical character recognition. Other approaches for identifying the asset based on analysis of AR-assisted information are also within the scope of one or more embodiments. The remote support system can leverage generative AI to assist with any of these types of analysis.

At 1110, an asset record for the discovered asset is generated based on the identity obtained at step 1108 and any supplemental information about the asset submitted by the user via the client device (e.g., a location of the asset, a function of the asset, a proprietary name of the asset, etc.). The asset record can include such information as the identity of the asset, the asset's current location and home location, status information for the asset (e.g., a current memory or processing capacity, a currently installed firmware version, a checked in or checked out status, etc.), or other such information. The asset record can be stored together with records of other discovered industrial assets that are in use within the customer's facility, and for which remote support is to be provided by the system.

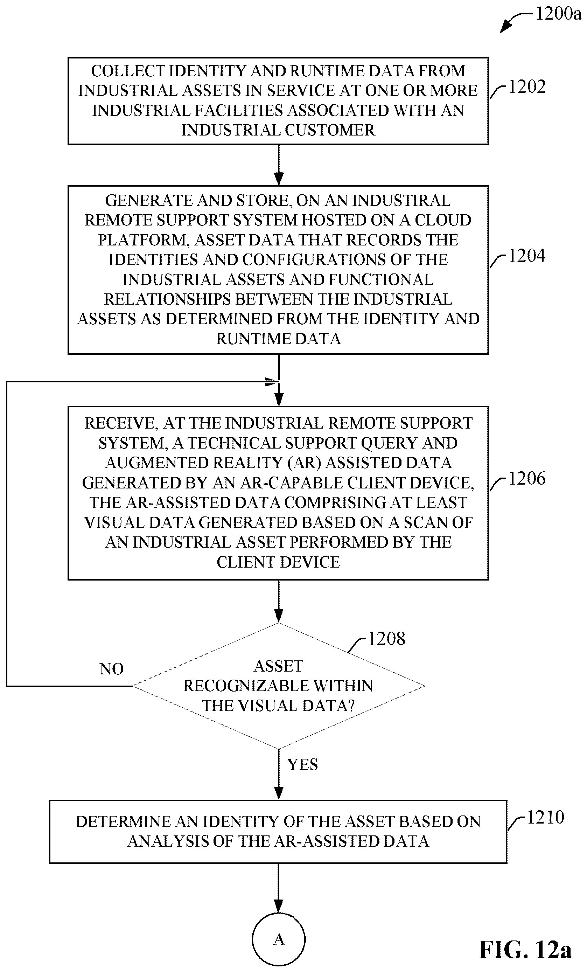

FIG. 12a illustrates a first part of an example methodology 1200a for performing AR-assisted remote support for industrial assets. Initially, at 1202, identity and runtime data is collected from industrial assets that are in service at one or more industrial facilities associated with an industrial customer. This data can be collected and managed, for example, by a cloud-based remote support system that maintains an inventory record of the customer's industrial assets (e.g., industrial monitoring and control devices, machines, production lines, etc.) and generates responses to technical support queries based on analysis of this asset information. At least some of the asset identity information can be generated based on visual information submitted by an AR-capable client device. At 1204, the system generates and stores asset data that records the identities and configurations of the industrial assets, as well as learned functional relationships between the assets, as determined from the identity and runtime data collected at step 1202.

At 1206, a technical support query is received at the industrial remote support system together with AR-assisted data generated by an AR-capable client device, where the AR-assisted data comprises at least visual data generated based on a scan of an industrial asset performed by the client device. At 1208, a determination is made as to whether an industrial asset is recognizable within the visual data received at step 1206 (similar to step 1106 of methodology 1 100). If no asset is recognizable in the data (NO at step 1208), the user may be prompted to rescan the asset, and the methodology returns to step 1206. Alternatively, if an asset is recognizable (YES at step 1208), the methodology proceeds to step 1210, where an identity of the asset is determined based on analysis of the AR-assisted data received at 1206.

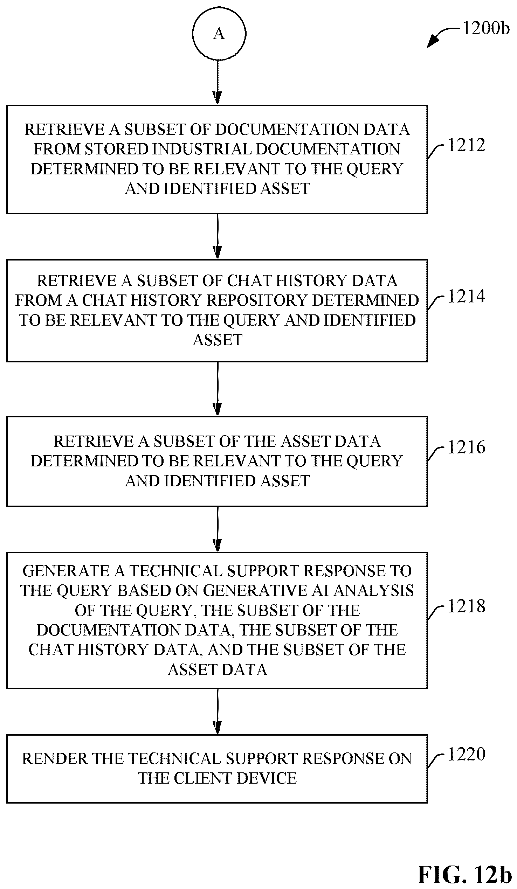

The methodology then proceeds to the second part 1200b illustrated in FIG. 12b. At 1212, a subset of documentation data is retrieved from stored industrial documentation determined to be relevant to the query and the asset identified at step 1210. This stored documentation can include, for example, programming manuals, industrial device manuals or product specification sheets, functional specification documents, knowledgebase articles describing solutions to known problems associated with specific industrial devices or software, failure code information, or other such documents. At 1214, a subset of chat history data is retrieved from a repository of archived chat histories determined to be relevant to the query and the identified asset. The archived chat histories can comprise the content of chat sessions between the remote support system and users associated with multiple customer entities. Each chat history in the repository can include natural language prompts submitted by a user during a technical support session, as well as the support guidance, information, or resolution recommendations generated by the remote support system in response to these prompts.

At 1216, a subset of the asset data determined to be relevant to the query and the identified asset is retrieved. This may include, for example, configuration or historical runtime information for the identified asset itself, information about any related assets known to have a functional relationship with the identified asset and which is relevant to the user's query, or other such asset data. At 1218, a technical support response to the query received at step 1216 is generated based on generative AI analysis of the query, the subset of the documentation data retrieved at step 1212, the subset of the chat history data retrieved at step 1214, and the subset of the asset data retrieved at step 1216. As part of this analysis, the remote support system can formulate one or more prompts directed to a generative AI model based on content off the query, the subset of the documentation data, the subset of the chat history data, and the subset of the asset data, and formulate the technical support response based on the generative AI model's responses to the prompts. At 1220, the technical support response generated at 1218 is rendered on the client device. In some embodiments, the response can be rendered as an AR presentation on the client device, such that alphanumeric and graphical content that conveys the technical support response is superimposed over a view of the asset seen through the client device.

Embodiments, systems, and components described herein, as well as control systems and automation environments in which various aspects set forth in the subject specification can be carried out, can include computer or network components such as servers, clients, programmable logic controllers (PLCs), automation controllers, communications modules, mobile computers, on-board computers for mobile vehicles, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC (programmable logic controller) or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, and human machine interface (HMI) that communicate *via* the network, which includes control, automation, and/or public networks. The PLC or automation controller can also communicate to and control various other devices such as standard or safety-rated I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, safety networks, and Ethernet/IP. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

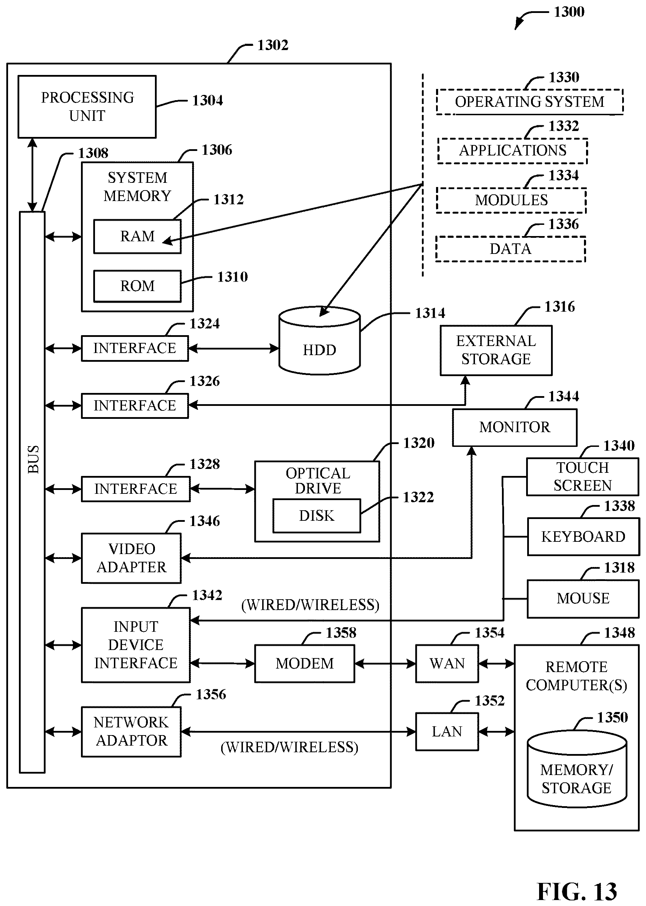

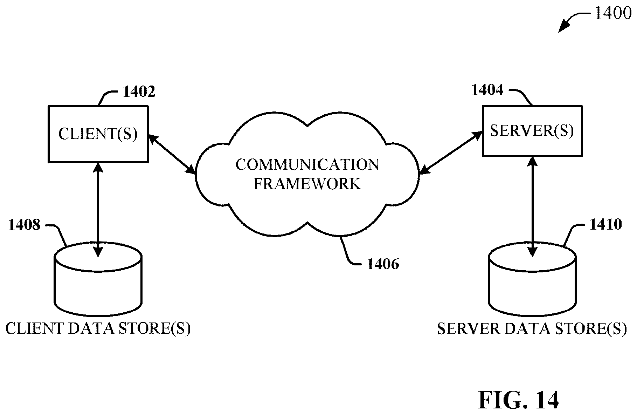

In order to provide a context for the various aspects of the disclosed subject matter, FIGs. 13 and 14 as well as the following discussion are intended to provide a brief, general description of a suitable environment in which the various aspects of the disclosed subject matter may be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 13, the example environment 1300 for implementing various embodiments of the aspects described herein includes a computer 1302, the computer 1302 including a processing unit 1304, a system memory 1306 and a system bus 1308. The system bus 1308 couples system components including, but not limited to, the system memory 1306 to the processing unit 1304. The processing unit 1304 can be any of various commercially available processors. Dual microprocessors and other multi-processor architectures can also be employed as the processing unit 1304.

The system bus 1308 can be any of several types of bus structure that can further interconnect to a memory bus (with or without a memory controller), a peripheral bus, and a local bus using any of a variety of commercially available bus architectures. The system memory 1306 includes ROM 1310 and RAM 1312. A basic input/output system (BIOS) can be stored in a non-volatile memory such as ROM, erasable programmable read only memory (EPROM), EEPROM, which BIOS contains the basic routines that help to transfer information between elements within the computer 1302, such as during startup. The RAM 1312 can also include a high-speed RAM such as static RAM for caching data.

The computer 1302 further includes an internal hard disk drive (HDD) 1314 (e.g., EIDE, SATA), one or more external storage devices 1316 (e.g., a magnetic floppy disk drive (FDD) 1316, a memory stick or flash drive reader, a memory card reader, etc.) and an optical disk drive 1320 (e.g., which can read or write from a CD-ROM disc, a DVD, a BD, etc.). While the internal HDD 1314 is illustrated as located within the computer 1302, the internal HDD 1314 can also be configured for external use in a suitable chassis (not shown). Additionally, while not shown in environment 1300, a solid state drive (SSD) could be used in addition to, or in place of, an HDD 1314. The HDD 1314, external storage device(s) 1316 and optical disk drive 1320 can be connected to the system bus 1308 by an HDD interface 1324, an external storage interface 1326 and an optical drive interface 1328, respectively. The interface 1324 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 1302, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1312, including an operating system 1330, one or more application programs 1332, other program modules 1334 and program data 1336. All or portions of the operating system, applications, modules, and/or data can also be cached in the RAM 1312. The systems and methods described herein can be implemented utilizing various commercially available operating systems or combinations of operating systems.

Computer 1302 can optionally comprise emulation technologies. For example, a hypervisor (not shown) or other intermediary can emulate a hardware environment for operating system 1330, and the emulated hardware can optionally be different from the hardware illustrated in FIG. 13. In such an embodiment, operating system 1330 can comprise one virtual machine (VM) of multiple VMs hosted at computer 1302. Furthermore, operating system 1330 can provide runtime environments, such as the Java runtime environment or the .NET framework, for application programs 1332. Runtime environments are consistent execution environments that allow application programs 1332 to run on any operating system that includes the runtime environment. Similarly, operating system 1330 can support containers, and application programs 1332 can be in the form of containers, which are lightweight, standalone, executable packages of software that include, e.g., code, runtime, system tools, system libraries and settings for an application.

Further, computer 1302 can be enable with a security module, such as a trusted processing module (TPM). For instance with a TPM, boot components hash next in time boot components, and wait for a match of results to secured values, before loading a next boot component. This process can take place at any layer in the code execution stack of computer 1302, e.g., applied at the application execution level or at the operating system (OS) kernel level, thereby enabling security at any level of code execution.

A user can enter commands and information into the computer 1302 through one or more wired/wireless input devices, e.g., a keyboard 1338, a touch screen 1340, and a pointing device, such as a mouse 1318. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1304 through an input device interface 1344 that can be coupled to the system bus 1308, but can be connected by other interfaces, such as a parallel port, an IEEE 1394 serial port, a game port, a USB port, an IR interface, a BLUETOOTH^{®} interface, etc.

A monitor 1344 or other type of display device can be also connected to the system bus 1308 via an interface, such as a video adapter 1346. In addition to the monitor 1344, a computer typically includes other peripheral output devices (not shown), such as speakers, printers, etc.

The computer 1302 can operate in a networked environment using logical connections via wired and/or wireless communications to one or more remote computers, such as a remote computer(s) 1348. The remote computer(s) 1348 can be a workstation, a server computer, a router, a personal computer, portable computer, microprocessor-based entertainment appliance, a peer device or other common network node, and typically includes many or all of the elements described relative to the computer 1302, although, for purposes of brevity, only a memory/storage device 1350 is illustrated. The logical connections depicted include wired/wireless connectivity to a local area network (LAN) 1352 and/or larger networks, e.g., a wide area network (WAN) 1354. Such LAN and WAN networking environments are commonplace in offices and companies, and facilitate enterprise-wide computer networks, such as intranets, all of which can connect to a global communications network, e.g., the Internet.

When used in a LAN networking environment, the computer 1302 can be connected to the local network 1352 through a wired and/or wireless communication network interface or adapter 1356. The adapter 1356 can facilitate wired or wireless communication to the LAN 1352, which can also include a wireless access point (AP) disposed thereon for communicating with the adapter 1356 in a wireless mode.

When used in a WAN networking environment, the computer 1302 can include a modem 1358 or can be connected to a communications server on the WAN 1354 via other means for establishing communications over the WAN 1354, such as by way of the Internet. The modem 1358, which can be internal or external and a wired or wireless device, can be connected to the system bus 1308 via the input device interface 1342. In a networked environment, program modules depicted relative to the computer 1302 or portions thereof, can be stored in the remote memory/storage device 1350. It will be appreciated that the network connections shown are example and other means of establishing a communications link between the computers can be used.

When used in either a LAN or WAN networking environment, the computer 1302 can access cloud storage systems or other network-based storage systems in addition to, or in place of, external storage devices 1316 as described above. Generally, a connection between the computer 1302 and a cloud storage system can be established over a LAN 1352 or WAN 1354 e.g., by the adapter 1356 or modem 1358, respectively. Upon connecting the computer 1302 to an associated cloud storage system, the external storage interface 1326 can, with the aid of the adapter 1356 and/or modem 1358, manage storage provided by the cloud storage system as it would other types of external storage. For instance, the external storage interface 1326 can be configured to provide access to cloud storage sources as if those sources were physically connected to the computer 1302.

The computer 1302 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

FIG. 14 is a schematic block diagram of a sample computing environment 1400 with which the disclosed subject matter can interact. The sample computing environment 1400 includes one or more client(s) 1402. The client(s) 1402 can be hardware and/or software (e.g., threads, processes, computing devices). The sample computing environment 1400 also includes one or more server(s) 1404. The server(s) 1404 can also be hardware and/or software (e.g., threads, processes, computing devices). The servers 1404 can house threads to perform transformations by employing one or more embodiments as described herein, for example. One possible communication between a client 1402 and servers 1404 can be in the form of a data packet adapted to be transmitted between two or more computer processes. The sample computing environment 1400 includes a communication framework 1406 that can be employed to facilitate communications between the client(s) 1402 and the server(s) 1404. The client(s) 1402 are operably connected to one or more client data store(s) 1408 that can be employed to store information local to the client(s) 1102. Similarly, the server(s) 1404 are operably connected to one or more server data store(s) 1410 that can be employed to store information local to the servers 1404.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible. Accordingly, the disclosed subject matter is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips...), optical disks [c.g., compact disk (CD), digital versatile disk (DVD)...], smart cards, and flash memory devices (e.g., card, stick, key drive...).

## Claims

1. A system, comprising:
a memory that stores executable components; and
a processor, operatively coupled to the memory, that executes the executable components, the executable components comprising:
a user interface component configured to receive, from a client device associated with an industrial customer, visual data representing shapes of objects within a field of view of the client device;
an asset identification component configured to identify an industrial asset within the field of view of the client device based on first analysis of the visual data;
a context retrieval component configured to, based on a result of the first analysis performed by the asset identification component, retrieve contextual data determined to be relevant to the industrial asset from a repository of industrial documentation; and
a generative AI component configured to generate a natural language response comprising information about the industrial asset based on second analysis of the result of the first analysis performed by the asset identification component, the contextual data, and a response prompted from a generative AI model,
wherein the user interface component is configured to render the natural language response on the client device.

2. The system of claim 1, wherein the information about the industrial asset comprises at least one of training information explaining how to operate or maintain the industrial asset, issue resolution information describing operational or maintenance actions designed to resolve a performance problem experienced by the industrial asset, an identity of the industrial asset, a function of the industrial asset, operational statistics for the industrial asset, information explaining how to activate software on the industrial asset, or contact information for live technical support personnel capable of providing technical support for the industrial asset.

3. The system of claim 1 or 2, at least one of:
wherein
the user interface component is further configured to receive, with the visual data, a natural language prompt requesting a type of information about the industrial asset, and
the generative AI component is configured to further perform the second analysis on the natural language prompt;
wherein the natural language prompt specifies at least one of a description of a performance issue being experienced by the industrial asset, an identity of an alarm generated by the industrial asset, a request for recommended preventative measures to perform on the industrial asset for mitigating future performance issues, or a request for guidance in performing a maintenance task on the industrial asset; and
wherein the industrial documentation stored in the repository of industrial documentation comprises at least one of programming manuals, industrial device manuals, industrial device product specification documents, functional specification documents, knowledgebase articles describing solutions to problems associated with industrial devices or software, or failure code documentation.

4. The system of one of claims 1 to 3, wherein
the generative AI component is configured to, as part of the second, formulate a prompt directed to the generative AI model and designed to obtain, as the response from the generative AI model, information used by the generative AI component to generate the natural language response, and
the generative AI component generates the prompt based on the result of the first analysis and the contextual data.

5. The system of one of claims 1 to 4, wherein the context retrieval component is further configured to retrieve, based on the result of the first analysis, chat history data determined to be relevant to the industrial asset, and the generative AI component is configured to further perform the second analysis on the chat history data.

6. The system of one of claims 1 to 5, at least one of:
wherein the user interface component is configured to render the natural language response as an augmented reality presentation on the client device;
wherein
the visual data is first visual data,
the industrial asset is a first industrial asset, and
the executable components further comprise an asset registration component configured to, in response to identification of a second industrial asset based on analysis of second visual data received by the user interface, create an asset record for the second industrial asset and store the asset record as part of asset data maintained for the industrial customer; and
wherein the industrial asset is at least one of an industrial controller, an I/O module, a motor drive, a human-machine interface terminal, a contactor, an industrial machine, a component of the industrial machine, or a maintenance tool.

7. The system of one of claims 1 to 6, further comprising a device interface component configured to generate a control instruction directed to the industrial asset based on a result of the second analysis.

8. The system of claim 7, wherein the control instruction is at least one of an instruction to modify a setpoint of a controlled industrial process, an instruction to change an operating mode of a device or a machine, or an instruction to change a speed of a controlled industrial process.

9. A method, comprising:
receiving, by a system comprising a processor, visual data from a client device associated with an industrial customer, wherein the visual data represents shapes of objects within a field of view of the client device;
in response to the receiving, identifying, by the system, an industrial asset within the field of view of the client device based on first analysis of the visual data;
retrieving, by the system based on a result of the first analysis, contextual data determined to be relevant to the industrial asset from a repository of industrial documentation;
generating, by the system, a natural language response comprising information about the industrial asset based on second analysis of the result of the first analysis, the contextual data, and a response prompted from a generative artificial intelligence (AI) model; and
rendering, by the system, the natural language response on the client device.

10. The method of claim 9, wherein the information about the industrial asset comprises at least one of training information explaining how to operate or maintain the industrial asset, issue resolution information describing operational or maintenance actions designed to resolve a performance problem experienced by the industrial asset, an identity of the industrial asset, a function of the industrial asset, operational statistics for the industrial asset, information explaining how to activate software on the industrial asset, or contact information for live technical support personnel capable of providing technical support for the industrial asset.

11. The method of claim 9 or 10, further comprising receiving, by the system in association with the visual data, a natural language prompt requesting a type of information about the industrial asset,
wherein the second analysis is performed on the result of the first analysis, the contextual data, the response prompted from a generative AI model, and the natural language prompt.

12. The method of claim 11, wherein the natural language prompt specifies at least one of a description of a performance issue being experienced by the industrial asset, an identity of an alarm generated by the industrial asset, a request for recommended preventative measures to perform on the industrial asset for mitigating future performance issues, or a request for guidance in performing a maintenance task on the industrial asset.

13. The method of one of claims 9 to 12, at least one of:
further comprising, as part of the second analysis:
formulating, by the system based on the result of the first analysis and the contextual data, a prompt directed to the generative AI model and designed to obtain, as the response prompted from the generative AI model, information used by the system to generate the natural language response; and
wherein the industrial documentation stored in the repository of industrial documentation comprises at least one of programming manuals, industrial device manuals, industrial device product specification documents, functional specification documents, knowledgebase articles describing solutions to problems associated with industrial devices or software, or failure code documentation.

14. A non-transitory computer-readable medium having stored thereon instructions that, in response to execution, cause a system comprising a processor to perform operations, the operations comprising:
receiving visual data from a client device associated with an industrial customer, wherein the visual data represents shapes of objects within a field of view of the client device;
in response to the receiving:
identifying an industrial asset within the field of view of the client device based on first analysis of the visual data;
retrieving, based on a result of the first analysis, contextual data determined to be relevant to the industrial asset from a repository of industrial documentation;
generating a natural language response comprising information about the industrial asset based on second analysis of the result of the first analysis, the contextual data, and a response prompted from a generative artificial intelligence (AI) model; and
rendering the natural language response on the client device.

15. The non-transitory computer-readable medium of claim 14, wherein the information about the industrial asset comprises at least one of training information explaining how to operate or maintain the industrial asset, issue resolution information describing operational or maintenance actions designed to resolve a performance problem experienced by the industrial asset, an identity of the industrial asset, a function of the industrial asset, operational statistics for the industrial asset, information explaining how to activate software on the industrial asset, or contact information for live technical support personnel capable of providing technical support for the industrial asset.
